## Europäisches Patentamt

## European Patent Office

## Office européen des brevets

(19)

(11) Veröffentlichungsnummer: **0 200 015**
**B1**

(12) **EUROPÄISCHE PATENTSCHRIFT**

(45) Veröffentlichungstag der Patentschrift:
06.12.89

(51) Int. Cl.⁴: **G11B 5/31**

(21) Anmeldenummer: **86104430.3**

(22) Anmeldetag: **01.04.86**

(54) **Verfahren zur Herstellung mindestens eines Magnetkopfes in Dünnfilmtechnik.**

(30) Priorität: **15.04.85  DE 3513431**

(43) Veröffentlichungstag der Anmeldung:
**10.12.86 Patentblatt 86/45**

(45) Bekanntmachung des Hinweises auf die Patenterteilung:
**06.12.89 Patentblatt 89/49**

(84) Benannte Vertragsstaaten:
**AT CH DE FR GB IT LI NL SE**

(73) Patentinhaber: **Siemens Aktiengesellschaft,
Wittelsbacherplatz 2, D-8000 München 2(DE)**

(72) Erfinder: **Schewe, Herbert, Dr. Dipl.-Phys.,
Haydnstrasse 58, D-8522 Herzogenaurach(DE)**
Erfinder: **Stephani, Dietrich, Dr. Dipl.-Ing.,
Lachnerstrasse 67, D-8520 Erlangen(DE)**

(56) Entgegenhaltungen:
EP-A- 0 096 343

PATENTS ABSTRACTS OF JAPAN, Band 7,
Nr. 228 (P-228)[1373], 8. Oktober 1983; & JP - A
- 58 118 018
PATENTS ABSTRACTS OF JAPAN, Band 3,
Nr. 28 (E-96), 9. März 1979; & JP - A - 54 5708
PATENTS ABSTRACTS OF JAPAN, Band 7,
Nr. 241 (P-232)[1386], 6. Oktober 1983; & JP - A
- 58 128 013
PATENTS ABSTRACTS OF JAPAN, Band 2, Nr. 108, 8.
September 1978, Seite 5818E78; & JP - A - 53 74 014
PATENTS ABSTRACTS OF JAPAN, Band 7,
Nr. 146 (P-206)[1291], 25. Juni 1983; & JP - A - 58 57 614
PATENTS ABSTRACTS OF JAPAN, Band 7,
Nr. 70 (P-185)[1215], 23. März 1983; & JP - A - 57 212 609

## Beschreibung

Die Erfindung bezieht sich auf ein Verfahren zur Herstellung mindestens eines Magnetkopfes in Dünnfilmtechnik, der einen den magnetischen Fluß führenden ringkopfähnlichen Leitkörper mit mindestens zwei Magnetschenkeln enthält, die einen Zwischenraum mit einem erweiterten Bereich begrenzen, durch welchen sich die Windungen mindestens einer Schreib- und/oder Lesespulenwicklung erstrecken, und die einem Aufzeichnungsmedium zugewandte und mit vorbestimmtem Abstand zueinander in einer gemeinsamen Ebene liegende Polflächen aufweisen. Bei diesem Verfahren wird auf einem Substratkörper ein Vorprodukt des Magnetkopfes ausgebildet, dessen Magnetschenkel über die Ebene der Polflächen hinausragen und dort nur durch einen Spalt beabstandete Endstücke bilden, welche durch eine materialabtragende Bearbeitung von der dem Aufzeichnungsmedium zugewandten Seite her bis zur Ebene der Polflächen abgearbeitet werden.

Ferner wird bei dem Verfahren im Bereich des Spaltes zwischen den Endstücken der Magnetschenkel ein elektrisch leitendes Teil vorgesehen, das gegenüber dem einen Endstück mittels einer Isolationsschicht elektrisch isoliert ist und das mit dem anderen Endstück elektrisch leitend so verbunden ist, daß eine Leiterstruktur aus elektrisch leitendem Material gebildet wird, die bei der materialabtragenden Bearbeitung gerade bei Erreichen der Ebene der Polflächen in zwei voneinander elektrisch isolierte Leiterteile aufgetrennt wird. Außerdem wird bei dem Verfahren der elektrische Widerstand zwischen diesen Leiterteilen zur Steuerung der materialabtragenden Bearbeitung herangezogen. Ein solches Verfahren geht z.B. aus der JP-A 58 118 018 hervor.

Mit diesem bekannten Verfahren sind Magnetköpfe sowohl zur longitudinalen (horizontalen) als auch zur senkrechten (vertikalen) Magnetisierung entsprechender Aufzeichnungsmedien herzustellen. Die Prinzipien dieser Magnetisierungsarten zur Speicherung von Informationen sind z.B. in der Veröffentlichung "IEEE Transactions on Magnetics", Vol. MAG-16, No. 1, Januar 1980, Seiten 71 bis 76 gegenübergestellt. An sich bekannte, für diese Magnetisierungsarten zu verwendende Magnetköpfe können insbesondere einen den Magnetfluß führenden, ringkopfähnlichen Leitkörper aufweisen, der mindestens zwei Magnetschenkel aus hochpermeablem Material aufweist. Diese Magnetschenkel begrenzen einen aufgrund einer Vergrößerung ihres gegenseitigen Abstandes entsprechend erweiterten Zwischenraum, durch welchen sich die Windungen mindestens einer Schreib- und/oder Lesespulenwicklung erstrecken, und bilden an ihrer dem Aufzeichnungsmedium zugewandten Seite Magnetpole aus, die untereinander mit vorbestimmtem geringen Abstand angeordnet sind. Die dem Aufzeichnungsmedium zugewandten Flächen dieser Pole sollen dabei in einer gemeinsamen Ebene zu liegen kommen, die zumindest annähernd parallel zur Oberfläche des Aufzeichnungsmediums verläuft.

Die exakte Ausbildung entsprechender Magnetschenkel ist jedoch bei Magnetköpfen, die in Dünnfilmtechnik herzustellen sind, mit Schwierigkeiten verbunden. Man sieht sich deshalb gezwungen, zunächst ein Vorprodukt des mindestens einen Magnetkopfes der Gestalt auszubilden, daß die Magnetschenkel über die Ebene der Polschuhe hinaus in Richtung auf das Aufzeichnungsmedium hin verlängert sind. In diesem Verlängerungsbereich bilden die Magnetschenkel im wesentlichen parallel verlaufende Endstücke, die nur durch einen Spalt, der auch als Luftspalt bezeichnet wird, beabstandet sind. Ferner ist noch mindestens eine eine Leiterstruktur oder -schleife darstellende Hilfestruktur aus elektrisch leitendem Material auszubilden, mit deren Hilfe eine Abtragung der Magnetschenkelendstücke von der dem Aufzeichnungsmedium zugewandten Seite her bis zu der Ebene zu gewährleisten ist, in welcher die Flächen der Pole der Magnetschenkel des Magnetkopfes liegen sollen.

Mit dem bekannten Verfahren ist ein Magnetkopf auszubilden, dessen einer Magnetschenkel durch einen Substratkörper aus magnetischem Material gebildet wird. Dieser Substratkörper hat eine verhältnismäßig große Ausdehnung in Bewegungsrichtung. Der bekannte Magnetkopf ist somit einem Kopftyp zuzurechnen, der einen schmalen Hauptpol und einen wesentlich breiteren Hilfspol aufweist. Bei diesem Kopftyp liegt die Weite des Spaltes deutlich über 1 µm. Für das bekannte Verfahren wird nun die Schreib-/Lesespulenwicklung mit einer besonderen Leiterbahn ausgestattet, die sich zwischen den verlängerten Endstücken der beiden Magnetschenkel hindurch erstreckt. Diese Leiterbahn soll sich dabei in elektrischem Kontakt mit dem äußeren Magnetschenkel befinden, der elektrisch leitend mit dem Substrat verbunden ist. Die Leiterbahn verläuft dabei im rechten Winkel zu der Ausdehnungsrichtung des Endstückes des äußeren Magnetschenkels. Wird nun von unten her der verlängerte Magnetkopf abgearbeitet, so wird nach Entfernen des unter dem Endstück hindurch verlaufenden Leiterbahnteiles der elektrische Kontakt zwischen der Spulenwicklung und dem äußeren Magnetschenkel bzw. dem Substrat aufgehoben. Diese Auftrennung des elektrischen Kontaktes wird zur Steuerung des Abtragungsprozesses herangezogen.

Bei dem bekannten Verfahren ist demnach die Lithographie der Leiterbahn an die Lithographie der Spulenwicklung gekoppelt. Dabei treten dann Strukturierungsprobleme auf, wenn man verhältnismäßig dicke Leiter der Spulenwicklung und Spaltweiten unter 1 µm vorsehen will.

Ein weiteres Verfahren zur Herstellung eines auf einem besonderen Substratkörper auszubildenden Dünnfilm-Magnetkopfes mit einer Leiterstruktur zur Steuerung einer materialabtragenden Bearbeitung geht aus der DE-A 3 333 590 hervor. Gemäß diesem Verfahren wird die Leiterstruktur außerhalb des Kopfbereiches angeordnet. Die Steuerung der materialabtragenden Bearbeitung ist jedoch ziemlich aufwendig, wobei auf dem Substratkörper ein verhältnismäßig großer Flächenanteil von der Leiterstruktur eingenommen wird.

Aufgabe der vorliegenden Erfindung ist es, das Verfahren der eingangs genannten Art zu vereinfachen, wobei der für die Herstellung eines Magnetkopfes erforderliche Flächenanteil auf einem besonderen Substratkörper möglichst klein gehalten werden soll.

Diese Aufgabe wird erfindungsgemäß mit den im kennzeichnenden zweiten Teil des Anspruchs 1 angegebenen Maßnahmen gelöst.

Die Vorteile des erfindungsgemäßen Verfahren sind insbesondere darin zu sehen, daß die Leiterstruktur zur Steuerung der materialabtragenden Bearbeitung des Substratkörpers bzw. der Magnetschenkel des auf diesem aufgebrachten Magnetkopfes in den Leitkörper des Magnetkopfes integriert ist, wobei der eine Leiterteil von dem Magnetschenkel gebildet wird, der von seinem Polbereich auf einen größeren Abstand bezüglich der Metallschicht führend ausgebildet ist. Mit dieser einfachen Leiterstruktur lassen sich dann ohne Schwierigkeiten Magnetköpfe ausbilden, die eine nahezu vernachlässigbar kleine Polhöhe in senkrechter Richtung bezüglich des Aufzeichnungsmediums aufweisen. Derartige Magnetköpfe sind hinsichtlich der Schreib- und Leseeigenschaften nach dem Prinzip der senkrechten Magnetisierung besonders günstig.

Vorteilhafte Ausgestaltungen des erfindungsgemäßen Verfahrens gehen aus den Unteransprüchen hervor.

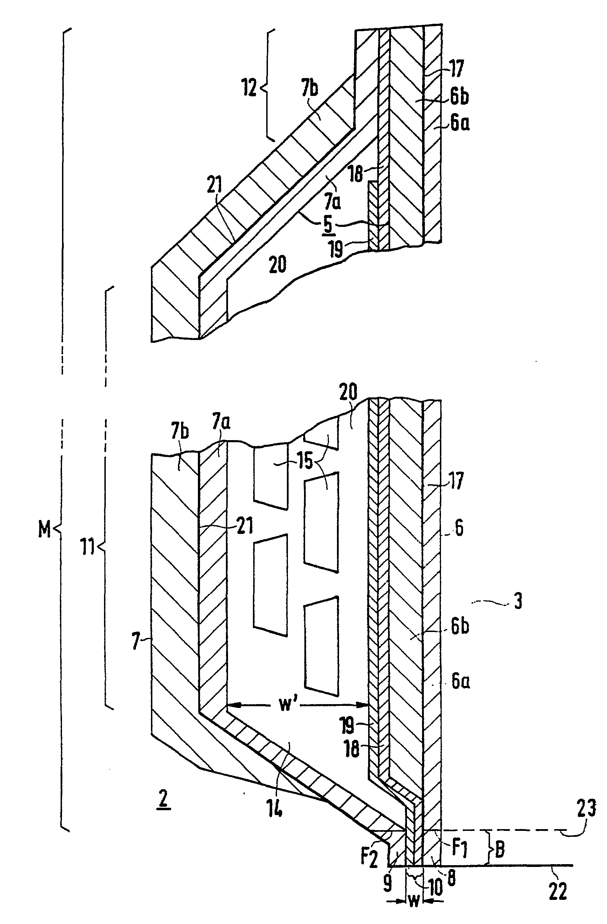

Zur weiteren Erläuterung der Erfindung gemäß den Ansprüchen wird nachfolgend auf die Zeichnung Bezug genommen, in deren Figur ein mit dem erfindungsgemäßen Verfahren herzustellender Magnetkopf schematisch veranschaulicht ist.

Bei dem in der Figur als Längsschnitt gezeigten Vorprodukt eines Schreib- und Lese-Magnetkopfes sind an sich bekannte ringkopfähnliche Ausführungsformen für das Prinzip der senkrechten (vertikalen) Magnetisierung zugrundegelegt (vgl. z.B. die EP 0 012 910 A1). In der Figur sind nur die wesentlichen Teile dieses mit 2 bezeichneten Vorproduktes ausgeführt, während der den eigentlichen Magnetkopf bildende Teil dieses Vorproduktes mit M bezeichnet ist. Das Vorprodukt 2 befindet sich auf der Flachseite eines Substratkörpers 3, der z.B. die Stirnseite oder die Rückseite eines gebräuchlichen, als Flugkörper bezeichneten Elementes bildet und in der Figur nicht näher ausgeführt ist.

Der Magnetkopf M bzw. sein Vorprodukt 2 enthält einen den Magnetfluß führenden ringkopfähnlichen Leitkörper 5 mit zwei Magnetschenkeln 6 und 7. Diese Schenkel sind weitgehend und insbesondere im Bereich ihrer dem Aufzeichnungsmedium zugewandten Endstücke 8 und 9 zumindest annähernd senkrecht zur Oberfläche des Aufzeichnungsmediums ausgerichtet, wobei zwischen ihnen ein Luftspalt 10 mit einer vorteilhaft geringen longitudinalen, d.h. in Bewegungsrichtung des Magnetkopfes weisenden Weite w von unter 1 µm, insbesondere unter 0,5 µm ausgebildet ist. In einem mittleren Bereich 11 des ringkopfähnlichen Leitkörpers 5 ist der Abstand zwischen den beiden Magnetschenkeln 6 und 7 gegenüber der Spaltweite w erweitert, indem z.B. der hinsichtlich der Bewegungsrichtung rückwärtige Magnetschenkel 7 in diesem Bereich auf einen größeren Abstand w' bezüglich des vorderen, gerade ausgebildeten und dem Substratkörper 3 am nächsten liegenden Magnetschenkels 6 führt. Außerhalb dieses Bereiches 11 ist auf der dem Aufzeichnungsmedium abgewandten Seite des Leitkörpers 5 der Magnetschenkel 7 in bekannter Weise in einem Verbindungsbereich 12 an den Magnetschenkel 6 angefügt, so daß sich dann die ringkopfähnliche Gestalt des Leitkörpers 5 ergibt. Durch den zwischen den beiden Magnetschenkeln 6 und 7 in dem mittleren Bereich 11 so vorhandenen Zwischenraum 14 erstreckt sich eine flache Spulenwicklung 15, die sowohl als Schreib- als auch als Lesespule dienen kann. Diese in der Figur nur angedeutete Spulenwicklung weist im allgemeinen eine oder mehrere Lagen mit einer verhältnismäßig großen Anzahl an Windungen auf.

Zur Herstellung des Magnetkopfes M bzw. seines Vorproduktes 2 in Dünnschicht- bzw. Dünnfilm-Technik wird im allgemeinen ein unmagnetischer, elektrisch nichtleitender Substratkörper 3 verwendet, der z.B. aus TiC und $Al_2O_3$ besteht. Gegebenenfalls kann der Substratkörper 3 noch mit einer hinreichend dicken Isolationsschicht z.B. aus $Al_2O_3$ versehen sein. Zum Aufbau der Magnetschenkel 6 und 7 werden im allgemeinen mehrere dünne Magnetschichten aus besonderen weichmagnetischen, hochpermeablen Materialien wie z.B. aus speziellen NiFe-Legierungen (Permalloy: Ni/Fe-81/19) oder aus FeB, CoZr oder CoHf durch Sputtern, Aufdampfen oder galvanische Abscheidung aufgebracht und jeweils durch eine dünne nicht-magnetische Zwischenschicht z.B. aus $SiO_2$ oder $Al_2O_3$ voneinander getrennt. Gegebenenfalls können diese Zwischenschichten auch zumindest teilweise weggelassen werden. Alle Schichten werden dabei durch an sich bekannte Techniken wie Fotolithographie, Plasma-, Ionenstrahl- oder naßchemisches Ätzen strukturiert, um so die beiden Magnetschenkel des Kopfes auszubilden.

Zum Aufbau des Vorproduktes 2 des Magnetkopfes M wird zunächst dessen innerer Magnetschenkel 6 aufgebracht. Dieser Magnetschenkel ist bis auf den Bereich seines dem Aufzeichnungsmedium zugewandten Endstückes 8 verhältnismäßig dick, beispielsweise 2 bis 4 µm dick ausgebildet und verjüngt zu diesem Endstück hin auf etwa 0,2 bis 2 µm. Dementsprechend besteht der Magnetschenkel gemäß dem dargestellten Ausführungsbeispiel aus einer inneren, dem Substratkörper 3 zugewandten Magnetschicht 6a mit verhältnismäßig geringer Dicke, auf der außerhalb des Bereichs des Endstückes 8 eine weitere Magnetschicht 6b mit vergleichsweise größerer Dicke aufgebracht ist. Zwischen diesen beiden Magnetschichten 6a und 6b liegt eine beispielsweise 0,1 µm dicke Isolationsschicht 17. Der so gebildete Magnetschenkel 6 wird dann mit einer dünnen, z.B. 0,1 bis 1 µm starken isolierenden Spaltschicht 18 überzogen, die vorteilhaft aus einem harten Material wie z.B. $Al_2O_3$ besteht. Gemäß der Erfindung wird nun auf dieser Spaltschicht 18 eine dünne Schicht 19 aus einem nicht-magnetischen, elektrisch leitenden Material abgeschieden, wobei diese Schicht zweckmäßig aus Gründen einer späteren Kontaktierung seitlich aus dem Bereich des Leitkörpers 5 des Magnetkopfes herausragt. Außerdem soll sich diese Schicht zumindest durch einen mit B bezeichneten Bereich des Magnetkopfes erstrecken, in dem die auszubildenden Endstücke 8 und 9 der Magnetschenkel 6 und 7 parallel verlaufen und nur durch den schmalen Spalt 10 voneinander getrennt sind. Wie in dem dargestellten Ausführungsbeispiel angedeutet ist, kann die Metallschicht 19 bis an den Verbindungsbereich 12 der Magnetschenkel heranreichen. Dieser Verbindungsbereich muß im allgemeinen hinsichtlich dieser Metallschicht ausgespart bleiben. Will man jedoch, daß die Metallschicht 19 auch durch diesen Bereich 12 verläuft, so muß dort auf ihr noch eine zusätzliche Isolationsschicht aufgebracht werden. Als Materialien für die Schicht 19 können beispielsweise Metalle wie Cu oder Al vorgesehen werden. Besonders vorteilhaft wird eine z.B. etwa 0,2 μm dicke Ti-Schicht verwendet.

Nach Fertigstellung des Magnetschenkels 6 sowie der Spaltschicht 18 und der Metallschicht 19 werden dann die einzelnen Windungen der als Schreib- und Lesespule dienenden Wicklung 15 ebenfalls in Dünnschicht-Technik in mindestens einer zur Substratkörperoberfläche parallelen Ebene hergestellt und strukturiert. Die z.B. aus Cu, Au oder Al bestehenden Windungen dieser allgemein mehrlagig ausgeführten Wicklung können beispielsweise Querschnitte von jeweils 3,5 μm x 3 μm aufweisen und sind in ein spezielles isolierendes Einebnungsmaterial 20 eingebettet. Dieses Material kann z.B. ein Kunststoff-Lack, insbesondere auf Polyimid-Basis, sein.

In einem nächsten Verfahrensschritt wird dann der äußere, vorzugsweise auch lamellierte Magnetschenkel 7 aufgebracht und strukturiert, wobei gemäß dem dargestellten Ausführungsbeispiel ebenfalls eine dünnere Magnetschicht 7a und eine dickere Magnetschicht 7b angenommen sind. Die beiden Magnetschichten 7a und 7b sind dabei z.B. durch eine Isolationsschicht 21 voneinander galvanisch getrennt. Ihre Dicken können z.B. denen der Schichten 6a bzw. 6b entsprechen. Mit der dünneren, dem Magnetschenkel 6 zugewandten Magnetschicht 7a allein wird das dem Aufzeichnungsmedium zugewandte Endstück 9 des Magnetschenkels 7 ausgebildet. Dabei ist diese dünnere Magnetschicht 7a im Bereich B des Spaltes 10 über die Spaltschicht 18 und die Metallschicht 19 und in dem mittleren Bereich 11 zusätzlich über das Einebnungsmaterial 20 mit den in ihm eingelagerten Windungen der Spulenwicklung 15 von dem Magnetschenkel 6 getrennt. Im Bereich B des Endstückes 9 liegt der Magnetschenkel 7 mit seiner Magnetschicht 7a unmittelbar an der Metallschicht 19 an, während in dem Verbindungsbereich 12 auf der dem Aufzeichnungsmedium abgewandten Seite des Kopfes nur die isolierende Spaltschicht 18 zwischen den Magnetschenkeln 7 und 6 verläuft.

Anschließend kann noch zum Schutz das so hergestellte Dünnschicht-Vorprodukt 2 mit einer verhältnismäßig dicken Protektionsschicht z.B. aus Al₂O₃ überzogen werden.

Zur Ausbildung der endgültigen Gestalt des Magnetkopfes M wird schließlich der Substratkörper 3 mit dem auf ihm aufgebrachten Vorprodukt 2 von seiner dem Aufzeichnungsmedium zugewandten Unterseite 22 her einer materialabtragenden Bearbeitung, beispielsweise einem Läppverfahren unterzogen. Dabei wird das Material vorteilhaft bis zu einer durch eine gestrichelte Linie 23 angedeuteten Ebene abgearbeitet, an der die im Bereich B der Endstücke 8 und 9 parallel angeordneten Magnetschenkel 6 und 7 auseinanderzulaufen beginnen, d.h. auf einen größeren gegenseitigen Abstand führen. In dieser Ebene liegen vorteilhaft die mit $F_1$ und $F_2$ bezeichneten Polflächen der beiden Magnetschenkel 6 und 7. Um genau diese Lage der Trennebene 23 und somit die Lage der Polflächen $F_1$ und $F_2$ bei der materialabtragenden Bearbeitung erreichen, d.h. in vertikaler Richtung festlegen zu können, wird gemäß der Erfindung der elektrische Widerstand zwischen der Metallschicht 19 und der Magnetschicht 7a des Magnetschenkels bei der Materialabtragung mit bekannten Meßeinrichtungen gemessen. Solange nämlich noch die Materialabtragung nur den Bereich B unterhalb der Trennebene 23 erfaßt, ist die galvanische Verbindung zwischen der Metallschicht 19 und der Magnetschicht 7a gegeben. Ist jedoch die Materialabtragung bis zu der Trennebene 23 vorangeschritten, so wird an dieser Ebene die galvanische Verbindung zwischen den beiden Teilen 7a und 19 aufgehoben. Die damit verbundene Widerstandserhöhung zwischen diesen beiden Teilen kann dann als Signal dienen, daß die gewünschte Tiefe der Materialabtragung und damit die gewünschte Lage der Ebene 23 bzw. der Polflächen $F_1$ und $F_2$ erreicht ist.

Bei dem erfindungsgemäßen Verfahren dienen also die aus elektrisch leitendem Material bestehende Magnetschicht 7a sowie die Metallschicht 19 als Leiterteile einer in das Vorprodukt 2 eines Magnetkopfes M integrierten Leiterstruktur zur Steuerung der Materialabtragung. Dabei wird zwar die Metallschicht 19 zweckmäßigerweise isoliert auf dem inneren, an dem Substratkörper 3 direkt anliegenden Magnetschenkel 6 aufgebracht. Gegebenenfalls kann man jedoch eine entsprechende Metallschicht auch auf der diesem Schenkel zugewandten Innenseite des äußeren Magnetschenkels 7 vorsehen, wobei eine Isolation zwischen dieser Schicht und dem Schenkel 7 sowie ein galvanischer Kontakt mit dem Endstück 8 des inneren Magnetschenkels 6 auszubilden sind.

Gemäß dem in der Figur gezeigten Ausführungsbeispiel zur Erläuterung des Verfahrens nach der Erfindung wurde davon ausgegangen, daß mit diesem Verfahren ein einziger Magnetkopf mit zwei Magnetschenkeln auszubilden ist. Ebensogut ist damit jedoch auch die gleichzeitige Herstellung mehrerer Magnetköpfe auf einem Substratkörper möglich, wobei auf diesem vorteilhaft eine verhältnismäßig große Anzahl unterzubringen ist. Die Magnetköpfe müssen dabei nicht unbedingt nur jeweils zwei Magnetschenkel aufweisen, sondern können z.B. auch drei Schenkel haben (vgl. z.B. EP 0 078 374 A1).

Außerdem wurde bei dem in der Figur angedeuteten Ausführungsbeispiel angenommen, daß mit dem Magnetkopf eine Schreib- und/oder Lese-Funktion nach dem Prinzip der senkrechten (vertikalen) Magnetisierung auszuüben ist. Das erfindungsgemäße Verfahren wird zwar vorteilhaft zur Herstellung derartiger Magnetköpfe vorgesehen; jedoch können mit ihm ebensogut auch Magnetköpfe hergestellt werden, die nach dem Prinzip der longitudinalen (horizontalen) Magnetisierung arbeiten.

**Patentansprüche**

1. Verfahren zur Herstellung mindestens eines Magnetkopfes (M) in Dünnfilmtechnik, der einen den magnetischen Fluß führenden ringkopfähnlichen Leitkörper (5) mit mindestens zwei Magnetschenkeln (6, 7) enthält, die einen Zwischenraum (14) mit einem erweiterten Bereich (11) begrenzen, durch welchen sich die Windungen mindestens einer Schreib- und/oder Lesespulenwicklung (15) erstrecken, und die einem Aufzeichnungsmedium zugewandte und mit vorbestimmtem Abstand (w) zueinander in einer gemeinsamen Ebene liegende Polflächen (F₁, F₂) aufweisen, bei welchem Verfahren
— ein Vorprodukt (2) des Magnetkopfes (M) ausgebildet wird, dessen Magnetschenkel (6, 7) über die Ebene der Polflächen (F₁, F₂) hinausragen und dort nur durch einen Spalt (10) beabstandete Endstücke (8, 9) bilden, welche durch eine materialabtragende Bearbeitung von der dem Aufzeichnungsmedium zugewandten Seite (22) her bis zur Ebene der Polflächen (F₁, F₂) abgearbeitet werden,
— im Bereich (B) des Spaltes (10) zwischen den Endstücken (8, 9) der Magnetschenkel (6, 7) ein elektrisch leitendes Teil vorgesehen wird, das gegenüber dem einen Endstück (8) mittels einer Isolationsschicht (18) elektrisch isoliert ist und das mit dem anderen Endstück (9) elektrisch leitend so verbunden ist, daß eine Leiterstruktur aus elektrisch leitendem Material gebildet wird, die bei der materialabtragenden Bearbeitung gerade bei Erreichen der Ebene der Polflächen (F₁, F₂) in zwei voneinander elektrisch isolierte Leiterteile aufgetrennt wird, und
— der elektrische Widerstand zwischen diesen Leiterteilen zur Steuerung der materialabtragenden Bearbeitung herangezogen wird, dadurch gekennzeichnet, daß auf einem nicht-magnetischen Substratkörper (3) die beiden Magnetschenkel (6, 7) voneinander durch die Isolationsschicht (18) elektrisch getrennt ausgebildet werden und daß als elektrisch leitendes Teil eine sich vom Bereich (B) des höchstens 1 µm weiten Spaltes (10) bis in den erweiterten Bereich (11) des Zwischenraumes (14) erstreckende, von der Schreib- und/oder Lesespulenwicklung (15) gesonderte Metallschicht (19) vorgesehen wird.

2. Verfahren nach Anspruch 1, dadurch gekennzeichnet, daß zur Isolation der Metallschicht (19) von dem einen Magnetschenkel (6) eine Spaltschicht (18) aus einem harten Material vorgesehen wird.

3. Verfahren nach Anspruch 1 oder 2, dadurch gekennzeichnet, daß auf dem dem Substratkörper (3) zugewandten Magnetschenkel (6) isoliert die Metallschicht (19) aufgebracht wird.

4. Verfahren nach einem der Ansprüche 1 bis 3, dadurch gekennzeichnet, daß die Metallschicht (19) aus Titan hergestellt wird.

**Claims**

1. Process for the production in thin film technology of at least one magnetic head (M) which contains an annular-head-like conductor body (5) conducting the magnetic flux, with at least two magnetic limbs (6, 7) which define an intermediate space (14) having a widened area (11) through which the turns of at least one write- and/or read-coil winding (15) extend, and which have pole surfaces (F₁, F₂) lying in a common plane, facing a recording medium and at a predetermined distance from each other, in which process
— an initial product (2) of the magnetic head (M) is formed whose magnetic limbs (6, 7) project beyond the plane of the pole surfaces (F₁, F₂) and there form end pieces (8, 9) spaced only by a gap (10), these end pieces being worked down by a material-removing treatment from the side (22) facing the recording medium to the plane of the pole surfaces (F₁, F₂),
— in the area (B) of the gap (10) between the end pieces (8, 9) of the magnetic limbs (6, 7) an electrically conductive portion is provided which is electrically insulated with respect to one end piece (8) by means of an insulating layer (18) and which is electrically conductively connected to the other end piece (9) so that a conductor structure of electrically conductive material is formed which during the material-removing treatment is divided into two conductor parts, electrically insulated from each other, just when the plane of the pole surfaces (F₁, F₂) is reached, and
— the electrical resistance between these conductor parts is made use of to control the material-removing treatment, characterised in that on a nonmagnetic substrate body (3) the two magnetic limbs (6, 7) are formed to be electrically separated from each other by the insulation layer (18), and in that a metal layer (19), separate from the write- and/or read-coil winding (15), is provided as the electrically conductive part, extending from the area (B) of the gap (10), which is 1 µm wide at the most, and into the widened area (11) of the intermediate space (14).

2. Process according to claim 1, characterised in that a gap layer (18) of a hard material is provided to insulate the metal layer (19) from the one magnetic limb (6).

3. Process according to claim 1 or 2, characterised in that the metal layer (19) is applied in insulated manner on the magnetic limb (6) facing the substrate body (3).

4. Process according to one of claims 1 to 3, characterised in that the metal layer (19) is made of titanium.

## Revendications

1. Procédé pour la fabrication d'au moins une tête magnétique (M) par la mise en œuvre de la technique à couche mince, qui comporte un corps conducteur (5) de forme analogue à une tête annulaire et guidant le flux magnétique, lequel corps conducteur possède au moins deux branches magnétiques (6, 7) qui délimitent un espace intermédiaire (14) à zone élargie (11), à travers laquelle s'étendent les spires d'au moins un enroulement d'écriture et/ou de lecture (15), et qui comportent des faces polaires ($F_1$, $F_2$) qui sont situées, du côté d'un milieu d'enregistrement, dans un plan commun et à une distance prédéterminée (w) entre elles, procédé dans lequel
    – on forme une ébauche (2) de la tête magnétique (M) dont les branches magnétiques (6, 7) débordent le plan des faces polaires ($F_1$, $F_2$) et y forment des pièces d'extrémité (8, 9) éloignées l'une de l'autre que par une fente (10), lesquelles pièces d'extrémité sont rognées à partir du côté (22) voisin du milieu d'enregistrement jusqu'au plan des faces polaires ($F_1$, $F_2$) à l'aide d'un usinage par enlèvement de matière
    – dans la zone (B) de la fente (10) située entre les pièces d'extrémité (8, 9) des branches magnétiques (6, 7) est prévue une pièce électriquement conductrice qui est électriquement isolée par rapport à l'une (8) des pièces d'extrémité à l'aide d'une couche isolante (18) et qui est reliée de façon électriquement conductrice avec l'autre (9) des pièces d'extrémité pour que soit formée une structure conductrice en un matériau électriquement conducteur, qui, lors de l'usinage par enlèvement de matière, est séparée, précisément lorsqu'est atteint le plan des faces polaires ($F_1$ $F_2$), en deux éléments conducteurs isolés électriquement entre eux, et
    – la résistance électrique entre ces deux éléments conducteurs est utilisée pour commander l'usinage par enlèvement de matière, caractérisé par le fait que sur un corps de substrat nonmagnétique (3) sont formées les deux branches magnétiques (6, 7) électriquement séparées entre elles par la couche isolante (18), et qu'il est prévu comme élément électriquement conducteur une couche métallique (19) qui est distincte de l'enroulement d'écriture et/ou de lecture (15) et qui s'étend de la zone (B) de la fente (10) ayant au maximum une largeur de 1 μm, l'intérieur de la zone (11) de l'espace intermédiaire (14).

2. Procédé selon la revendication 1, caractérisé par le fait que pour l'isolation de la couche métallique (19) de ladite branche magnétique (6), il est prévu une couche de fente (18) en un matériau dur.

3. Procédé selon la revendication 1 ou 2, caractérisé par le fait que sur la branche magnétique (6) qui est tournée vers le corps de substrat (3), est déposée, avec isolation, la couche métallique (19).

4. Procédé selon l'une des revendications 1 à 3, caractérisé par le fait que la couche métallique (19) est faite avec du titane.